# EUROPÄISCHE PATENTANMELDUNG

(11) **EP 3 037 602 A1**
(43) Veröffentlichungstag der Anmeldung: **29.06.2016**
(21) Anmeldenummer: 15202333.9
(22) Anmeldetag: 23.12.2015
(51) Int. Cl.: E04C 3/36, E04H 12/04

(54) **SEGMENTIERTER MAST ODER STÜTZE**

(30) Priorität: 23.12.2014 DE 102014119610
(71) Anmelder: Reichartz, Paul, 41352 Korschenbroich (DE)
(72) Erfinder: Reichartz, Paul, 41352 Korschenbroich (DE)
(74) Vertreter: Lenzing Gerber Stute

(57) **Zusammenfassung**

Einen Mast (1) mit mindestens einem Längsabschnitt, wobei der Längsabschnitt mit mindestens zwei in Umfangsrichtung aneinander anliegenden, einen Hohlkörper bildenden Segmenten (2) gebildet ist, die fest miteinander verbunden oder zusammengehalten sind. Die Aufgabe, einen solchen Mastes oder eine Stütze bereitzustellen, der bzw. die für möglichst hohe Traglasten geeignet und dennoch vergleichsweise einfach in der Herstellung ist, wird gelöst durch Mittel (26-29) zum Erzeugen eines in Umfangsrichtung wirkenden Anpressdrucks von benachbarten Segmenten (2) gegeneinander und durch Mittel (11, 12), die einem Verschieben der Segmente gegeneinander entgegenwirken.

## Beschreibung

Die vorliegende Erfindung betrifft einen Mast oder eine Stütze mit mindestens einem Längsabschnitt, wobei der Längsabschnitt mit mindestens zwei in Umfangsrichtung aneinander anliegenden, einen Hohlkörper bildenden Segmenten gebildet ist, die fest miteinander verbunden oder zusammengehalten sind.

Masten der eingangs genannten Art sind bekannt.

So offenbart die US 2,824,342 einen Mast mit mehreren Abschnitten, die jeweils aus Brettschichthölzern hergestellt sind. Während der Mastfuß und die Mastspitze als Vollprofil ausgebildet sind, ist der mittlere Teil des Mastes als quadratisches Hohlprofil ausgebildet. Die das Hohlprofil bildenden seitlichen Brettschichthölzer sind durch in den Innenecken des Hohlprofils verlaufende Holzstäbe stabilisiert.

Des Weiteren ist aus der EP 0 096 121 B1 ein länglicher, sich nach oben hin verjüngender Mast aus einer Mehrzahl von länglichen, ebenen, ein Hohlprofil bildenden Platten bekannt. Die Platten bestehen im Wesentlichen aus einem Polyisozyanat-haltigen Verbundwerkstoff mit in Längsrichtung des Baukörpers ausgerichteten Holzflocken. Benachbarte Platten sind an ihren Längskanten miteinander verklebt. In einer offenbarten Ausführungsform wird eine lange Maststruktur dadurch erzeugt, dass mehrere Abschnitte des Baukörpers teleskoparmartig ineinandergesteckt und miteinander verklebt sind. Es werden kreisförmige sowie sechs- und achteckige Mastquerschnitte vorgeschlagen. Bei den kreisförmigen Mastquerschnitten sind die Platten gekrümmt.

Solche Masten sind eine Alternative zu Rundholzmasten, aber auch zu Stahl- und Betonmasten. Sie haben gegenüber einfachen Rundholzmasten in aller Regel den Vorteil einer vergleichsweise höheren Traglast, aber gleichzeitig den Nachteil, dass sie gegenüber Rundholzmasten deutlich aufwändiger in der Herstellung sind. So ist das Verkleben der einzelnen Platten so, dass die Mastkonstruktion höhere Lasten gut aufnehmen kann, äußerst aufwändig. Außerdem können sie, genauso wie Beton- oder Stahlmasten, produktions- und transportbedingt nur in begrenzten Längen und Dimensionen hergestellt werden, unter anderem auch wegen der sehr hohen Eigengewichte solcher Masten.

Demgegenüber liegt der vorliegenden Erfindung die Aufgabe zugrunde, einen Mast oder eine Stütze bereitzustellen, der bzw. die für möglichst hohe Traglasten geeignet und dennoch vergleichsweise einfach in der Herstellung ist.

Diese Aufgabe wird mit einem Mast bzw. einer Stütze der eingangs genannten Art gemäß Anspruch 1 gelöst durch Mittel zum Erzeugen eines in Umfangsrichtung wirkenden Anpressdrucks von benachbarten Segmenten gegeneinander und durch Mittel, die einem Verschieben der Segmente gegeneinander entgegenwirken.

Aus der Aufteilung einzelner Längsabschnitte des Trägers in Segmente, die nicht miteinander verleimt werden müssen, sondern durch Mittel zum Erzeugen eines in Umfangsrichtung wirkenden Anpressdrucks von benachbarten Segmenten gegeneinander und durch Mittel, die einem Verschieben der Segmente gegeneinander entgegenwirken, zusammengehalten werden, ergibt sich eine Vielzahl von Vorteilen bei der Konstruktion und Produktion.

So verläuft beispielsweise die statische Lastbeanspruchung von Masten entlang der Längsachse nicht gleichmäßig. In bestimmten Mastabschnitten treten höhere Lasten auf als in anderen, so zum Beispiel am Erdübergangsbereich oder an den Anschlusspunkten von Traversen. Durch die Verwendung einzelner Segmente kann die Festigkeit des Mastes bzw. der Stütze in verschiedenen Längsabschnitten oder in einzelnen Segmenten den statischen Gegebenheiten angepasst werden, indem beispielsweise an statisch stärker belasteten Stellen des Mastes bzw. der Stütze Segmente aus einem Werkstoff mit höherer Festigkeit verwendet werden. Auf diese Weise kann die Mastkonfiguration weitestgehend perfekt und einfach an die statischen Lastanforderungen angepasst werden kann. Hierdurch kann insbesondere der Materialeinsatz und das Gewicht des Mastes bzw. der Stütze optimiert werden.

Dadurch, dass die Segmente durch Mittel zum Erzeugen eines in Umfangsrichtung wirkenden Anpressdrucks von benachbarten Segmenten gegeneinander und durch Mittel, die einem Verschieben der Segmente gegeneinander entgegenwirken, zusammengehalten werden, kann außerdem das ansonsten zwingend erforderliche Verleimen von Einzelsegmenten miteinander entfallen. Dadurch wird es möglich, Masten und Stützen in nahezu beliebiger Länge an ihrem jeweiligen Einsatzort zusammenzusetzen, ohne dass ihre Länge oder ihr Gewicht beispielsweise aufgrund von Transportbeschränkungen eingeschränkt ist.

Die Länge der Segmente muss nicht der Länge des Mastes oder der Stütze entsprechen. Vielmehr kann der Mast oder die Stütze aus mehreren miteinander verbundenen Längsabschnitten hergestellt sein. Die Herstellung einer Vielzahl von Segmenten für den oder die Längsabschnitte ist bereits aufgrund ihrer kleineren Maße und der Möglichkeit, sie industriell in hohen Stückzahlen zu fertigen, deutlich günstiger als die Herstellung von Masten oder Stützen in vollständiger Länge, selbst dann, wenn die Segmente später noch zu einem Mast oder zu einer Stütze zusammengesetzt werden müssen. Werden die Segmente aus einem Holzwerkstoff gefertigt, können die Werkstoffplatten, aus denen die Segmente herausgeschnitten werden, deutlich kleiner sein. Der maschinelle Aufwand für den Zuschnitt der Segmente ist geringer, ebenso wie der maschinelle Aufwand für das Imprägnieren bzw. Durchimprägnieren der Platten oder Segmente. Es werden keine Maschinen in Sondergröße mehr benötigt, so dass die Segmente von deutlich mehr Betrieben hergestellt werden können, da es nicht mehr darauf ankommt, dass ein Betrieb Spezialmaschinen, die auf den Zuschnitt, die Imprägnierung und auch die Verleimung von Holzwerkstoffteilen in Sonderlänge zur Verfügung hat. Stattdessen können die Segmente mit rationalisierten, industriellen Produktionsmethoden hergestellt werden. Die Liefer- und Produktionskette besteht aufgrund der Vereinfachungen nur noch aus dem Materiallieferanten, dem Imprägnierbetrieb (der Materiallieferant kann, wenn entsprechende Imprägniereinrichtungen vorhanden sind, auch direkt die Imprägnierung übernehmen) und dem holzverarbeitenden Betrieb, welcher den Abbund der bereits imprägnierten Plattenwerkstoffe (Zuschnitt, Fräsarbeiten und Fügen der Segmente zu kompletten Masten oder Stützen) übernimmt. Vom holzverarbeitenden Betrieb werden dann alle für die Produktion eines Mastes oder einer Stütze benötigten Segmente einschließlich der zusätzlichen Bauteile direkt an den Endkunden/Verwender geliefert.

Die Segmente können eben, aber auch gekrümmt sein. Es können damit kreisförmige, elliptische sowie drei- oder mehreckige (vorzugsweise 6-, 9- oder 12-eckige) Mast- oder Stützenquerschnitte oder auch Querschnitte in freier Form damit hergestellt werden. Wenn alle Segmente eines Längsabschnitts oder gar aller Längsabschnitte eines Mastes oder einer Stütze gleich sind, werden Produktion und Transport am einfachsten.

Durch das Zusammenfügen eines Längsabschnitts aus verschiedenen Segmenten und das Verbinden mehrerer Längsabschnitte miteinander lassen sich Masten und Stützen mit nahezu beliebiger Länge herstellen, wobei die Länge der einzelnen Segmente eines Längsabschnitts unabhängig von der Gesamtlänge des Mastes oder der Stütze ist. Diese Art des Aufbaus eines Mastes vor Ort hat insbesondere für den Export von Hohlprofilmasten eine besondere Bedeutung, da der Transportaufwand für die Segmente beispielsweise eines Holzmastes gegenüber dem Aufwand für den Transport eines fertigen Hohlprofilmastes deutlich geringer ist.

In einer bevorzugten Ausgestaltung der Erfindung ist ein um die Segmente außen herum laufendes Spannmittel zum Erzeugen eines in Umfangsrichtung wirkenden Anpressdrucks von benachbarten Segmenten gegeneinander vorgesehen. Als Spannmittel kann insbesondere mindestens ein Spannband, vorzugsweise mindestens ein Spannband im Bereich des einen Endes und im Bereich des anderen Endes des Längsabschnitts, vorgesehen sein. Spannbänder können mit einer Spannvorrichtung angebracht und so stark auf Zug belastet werden, dass die einzelnen Segmente auch bei einem etwaigen Schwind- und Quellverhalten des Segmentmaterials, zum Beispiel bei Verwendung eines Holzwerkstoffes, aber auch bei Verformung der Segmente unter Last, zusammengehalten werden. Sind der Mast oder die Stütze konisch ausgebildet, sollten Spannbänder derart angebracht sein, dass eine Verschiebung der Spannbänder längs des Mastes oder der Stütze verhindert wird. Spannbänder aus Stahl sind beispielsweise besonders gut geeignet, da sie stark auf Zug beansprucht werden können und bei entsprechender Legierung auch wetterfest sind. Alternativ können Spannbänder beispielsweise auch aus einem Glas- oder Kohlefasermaterial oder auch aus einem technischen Textilmaterial bestehen.

Da sich die Lastbeanspruchung von Masten entlang ihrer Längsachse statisch nicht regelmäßig verteilt und bestimmte Teile von Masten höhere Lasten aufnehmen als andere, werden an den höher belasteten Teilen eines Mastes (oder auch einer Stütze) vorzugsweise breitere Spannbänder angebracht. Es können auch über die Länge des Längsabschnitts verteilt mehrere Spannbänder vorgesehen sein.

Auch können alternativ oder in Ergänzung hierzu Netzschläuche, z. B. aus Edelstahl oder einem Glasfasermaterial bzw. einem anderen technischen oder sonstigen Materialien, als Spannmittel eingesetzt werden.

Die Spannmittel werden mit geeigneten Mitteln um den Mast oder die Stütze herum gespannt. Alternativ ist es auch möglich, die Segmente unter Vorspannung, ähnlich wie bei Dauben in die Reifen von Holzfässern, in die Spannmittel einzusetzen. Zur Verstärkung des Längsabschnitts oder eines Teils hiervon können in den von den Segmenten umschlossenen Raum ein oder mehrere Füllkörper eingesetzt werden, die den Mast oder die Stütze zusätzlich aussteifen. Eine Verstärkung des Trägers kann insbesondere in Teilen des Trägers mit erhöhter Lastbeanspruchung sinnvoll sein. Zum Befestigen der Füllkörper im Hohlraum können beispielsweise an der Innenseite der Segmente Beschläge vorgesehen sein, an denen die Füllkörper befestigt werden. Sollen der oder die Füllkörper einen aus einem erfindungsgemäßen Mast im Erdübergangsbereich aussteifen, können sie im Innenraum auch bis zum Mastfuß reichen und einfach auf dem Mastuntergrund aufstehen. Als Füllkörper kommen nicht nur solche in Betracht, die den Hohlraum zwischen den Segmenten vollflächig ausfüllen, sondern beispielsweise auch quer verlaufende Stege, mit denen gegenüberliegende Segmente gegenseitig abgestützt werden können.

Werden die Segmente gegeneinander durch im Hohlraum des Trägers angeordnete Füllkörper abgestützt, kann dadurch ein Verschieben der Segmente gegeneinander in radialer Richtung wirkungsvoll vermieden werden.

Die Füllkörper können aus Stahl oder einem anderen Metall, aber auch aus Kunststoff bestehen und je nach Bedarf als Hohlprofil oder als Vollprofil ausgebildet sein.

Alternativ oder in Ergänzung zu den außen herum laufenden Spannmitteln können als Mittel zum Erzeugen eines in Umfangsrichtung wirkenden Anpressdrucks von benachbarten Segmenten gegeneinander auch Zugstangen vorgesehen sein, die durch das Innere des Mastes hindurchgeführt und an gegenüberliegenden Segmenten gehalten sind. Damit bei Aufbringen einer Zuglast auf die Segmente sich die Segmente nicht gegeneinander verschieben, können die Zugstangen beispielsweise über Blechformteile, die beispielsweise als H-Profil ausgebildet sein können und die Stirnkanten benachbarter Segmente klammerartig umgreifen, mit den Segmenten verbunden sein.

In einer Ausgestaltung des erfindungsgemäße Mastes oder der erfindungsgemäßen Stütze sind die aneinander anliegenden Stirnflächen benachbarter Segmente eines Längsabschnittes mit einander entsprechenden Vertiefungen und Erhöhungen als Mittel, die einem Verschieben der Segmente gegeneinander entgegen wirken, ausgebildet sind. Auf diese Weise können die Stirnseiten insbesondere in radialer Richtung verschränkt werden. Zumindest einige der Vertiefungen und Erhöhungen der aneinander anliegenden Stirnseiten der Segmente verlaufen vorzugsweise im Wesentlichen quer zur Längsrichtung der Stirnseite der Segmente. Sie können sich darüber hinaus bevorzugt jeweils über die gesamte Breite der Stirnseiten erstrecken. Damit wird zum einen erreicht, dass sich die Segmente nicht in Längsrichtung des Trägers gegeneinander verschieben können, und zum anderen, dass die Stirnseiten sich über eine möglichst breite Fläche in Längsrichtung des Trägers gegeneinander abstützen, so dass in Längsrichtung des Trägers wirkende Lasten von weitestgehend allen Segmenten aufgenommen werden. Die Erhöhungen und Vertiefungen können dabei beispielsweise einen halbkreisförmigen oder einen mehreckigen, insbesondere, dreieckigen oder trapezförmigen, Querschnitt aufweisen. Solche Querschnittsprofile können vergleichsweise einfach gefräst werden.

In einer darüber hinaus bevorzugten erfindungsgemäßen Ausgestaltung vergrößert sich der Querschnitt der quer zur Längsrichtung der Stirnseiten verlaufenden Erhöhungen einer Stirnseite von einer inneren Seite des Trägers in Richtung zur Außenseite des Trägers, während sich der Querschnitt der Vertiefungen dieser Stirnseite von einer inneren Seite des Trägers in Richtung zur Außenseite des Trägers verjüngt. Das Profil der daran anliegenden Stirnseite eines benachbarten Segments wäre dann entsprechend umgekehrt mit Erhöhungen, deren Querschnitt sich von einer inneren Seite des Trägers in Richtung zur Außenseite des Trägers verjüngt, und Vertiefungen, deren Querschnitt sich von einer inneren Seite des Trägers in Richtung zur Außenseite des Trägers vergrößert. Auf diese Weise kann sichergestellt werden, dass sich die Segmente an ihren Stirnseiten nicht radial gegeneinander verschieben.

Um ein einfaches Zusammensetzen eines Mastes oder einer Stütze zu ermöglichen und auch eine gute Übertragung von Torsionskräften im Mast bzw. in der Stütze zu bewirken, kann die mittlere Ebene der Stirnflächen, um die sich die Erhebungen und Vertiefungen erstrecken, im Wesentlichen radial zur Längsachse des Trägers verlaufen. Gerade bei achssymmetrischen Trägerkonstruktionen wird dadurch sichergestellt, dass die von den Spannmitteln auf die Segmente aufgebrachten Kräfte im Wesentlichen lotrecht auf der mittleren Ebene der Stirnflächen stehen.

Alternativ oder in Ergänzung zu einer Profilierung einander zugewandter Stirnseiten benachbarter Segmente als Mittel, die einem Verschieben der Segmente gegeneinander entgegenwirken, können die Stirnseiten auch miteinander verleimt sein. Die Verleimung kann aber, anders als bei vorbekannten Trägern, auch am Einsatzort des Trägers aufgebracht werden, da der für das Verleimen notwendige Anpressdruck mit den Spannmitteln erzeugt werden kann. Die Verleimung dient hier allerdings weniger einem Verschieben der Segmente entgegen, sondern dient vielmehr einem konstruktiven Holzschutz, da durch den Leimauftrag das Eindringen von Feuchtigkeit in die dafür empfindlichen Stirnseiten der Segmente verhindert wird.

Eine andere Alternative als Mittel zum Verhindern eines Verschiebens benachbarter Segmente gegeneinander kommen auch zwischen einander zugewandten Stirnseiten benachbarter Segmente angeordnete Materialstreifen in Betracht, insbesondere Metallbänder.

Die Metallbänder können in einer bevorzugten Ausgestaltung mit in beide Stirnseiten eingreifenden, spitzen Erhebungen, insbesondere Dornen oder Stiften versehen sein. Es kommen hierfür beispielsweise Verpackungsbänder aus Metall in Betracht, aus denen beidseitig zahnartige Elemente herausgedrückt sind, ähnlich wie bei Haushaltsreiben (z.B. Kartoffelreiben). Die zahnartigen Elemente der derart profilierten Metallstreifen oder -bänder können in die Stirnflächen eingepresst und/oder mit Rüttel- oder Vibrationsverfahren in die Stirnflächen eingebracht werden.

Die Materialstreifen können in einer weiteren bevorzugten Ausführungsform in Längsrichtung des Trägers über die Segmente überstehen. Die Materialstreifen können dann zum Anschluss des Trägers an ein anderes Bauteil, beispielsweise ein Betonbauteil oder ein Betonfundament, genutzt werden. Es können auch anders geartete Materialstreifen zwischen den einander zugewandten Stirnseiten benachbarter Segmente ein Materialstreifen eingesetzt werden, beispielsweise Lochbleche, die in Längsrichtung des Trägers über die Segmente überstehen, um den Mast oder die Stütze mit anderen Bauteilen, wie beispielsweise Betonbauteilen oder Fundamenten, zu verbinden.

Ein weiterer Ansatz zum Verhindern eines Verschiebens benachbarter Segmente in Längsrichtung besteht darin, Partikel zwischen den Stirnflächen benachbarter Segmente vorzusehen, die nadelähnlich in die Stirnflächen eingreifen. Solche Partikel können über Sandstrahlverfahren in eine Stirnfläche so eingeschossen werden, dass sie teilweise aus der Stirnfläche heraus stehen. Beispielsweise durch Anpressen der Stirnfläche des benachbarten Segments werden die hervorstehenden Partikel dann auch in die andere Stirnfläche eingedrückt, so dass sie Kräfte in Längsrichtung des Mastes von einem Segment auf das andere übertragen können. Die Partikel können auch in beide Stirnflächen zweier benachbarter Segmente eingeschossen werden. Durch die Partikel erhalten die Stirnflächen dann einen hohen Reibungskoeffizienten, so dass ein gegenseitiges Verschieben der aneinander anliegender Stirnflächen verhindert wird. Die Partikel können je nach Größe sogar soweit aus den Stirnflächen herausstehen, dass sich die Partikel aneinander anliegender Stirnflächen gewissermaßen ineinander verhaken. Wenn die Stirnflächen aneinander angepresst werden, können die Partikel beim Anpressen jeweils in die andere Stirnfläche auch eingepresst werden. Die Partikel bestehen vorzugsweise aus Metall oder Kunststoff, können aber auch aus Keramik bestehen.

Ein erfindungsgemäßer Mast bzw. eine erfindungsgemäße Stütze kann lediglich einen Längsabschnitt aufweisen, er kann aber insbesondere auch mit zwei oder mehr in Längsrichtung des Trägers hintereinander angeordneten und miteinander verbundenen Längsabschnitten gebildet sein. Wie bereits zuvor erwähnt, lassen sich so Masten oder Stützen mit nahezu beliebiger Länge herstellen.

Hierfür können die zugewandten Seiten zweier miteinander verbundener Längsabschnitte miteinander verzahnt sein. Die Flanken der Zähne können, gleich oder ähnlich wie die Stirnseiten benachbarter Segmente, mit Erhöhungen und Vertiefungen derart versehen sein, dass ein Verschieben benachbarter Segmente des einen und des anderen Längsabschnitts gegeneinander verhindert wird.

Eine Alternative zum Verbinden zweier erfindungsgemäßer Längsabschnitte besteht in der Verwendung eines Adapterstücks, beispielsweise einer doppelseitigen, den einen Rand des einen Längsabschnitts sowie den diesem zugewandten Rand des anderen Längsabschnitt jeweils beidseitig umfassenden Manschette, beispielsweise aus Stahl. Solche Manschetten müssen naturgemäß in der Länge so gewählt werden, dass die Übertragung aller Lasten von dem einen Längsabschnitt auf den anderen vollständig gewährleistet ist. Solche Adapterstücke können beispielsweise mithilfe von selbstbohrenden Schrauben, beispielsweise Holz-/Stahlbauschrauben, in ihrer Position im Übergangsbereich von einem Längsabschnitt zum nächsten gesichert werden.

In noch einer weiteren Alternative zum Verbinden eines oberen und eines unteren Längsabschnitts sind das Ende eines von zwei miteinander verbundenen Längsabschnitten außen und das damit verbundene Ende des anderen der beiden miteinander verbundenen Längsabschnitte innen konisch ausgebildet sind, und das Ende des einen Längsabschnitts sitzt im Ende des anderen Längsabschnitts. Ist der überlappende Bereich beider Längsabschnitte groß genug, kann eine sichere Übertragung aller Lasten von dem einen auf den anderen Längsabschnitt sichergestellt sein. Natürlich kann eine solche Verbindung zweier Längsabschnitte durch weitere Konstruktionselemente, wie beispielsweise Schrauben oder durch eine Verklebung, verstärkt werden.

Die erfindungsgemäßen Masten und Stützen sind vorzugsweise achssymmetrisch und können einen über die Länge gleichbleibenden, aber auch einen über die Länge veränderlichen und insbesondere konischen Querschnitt aufweisen.

Zur Vereinfachung des Zusammenfügen eines Trägers am Einsatzort können benachbarte Segmente des Trägers über ein oder mehrere Bänder miteinander verbunden sein, die als Aufroll- bzw. Montagehilfe dienen. Diese Bänder können zum Beispiel aus technischen Textilien bestehen oder dünne Metallbänder sein. Die einzelnen, einen Längsabschnitt bildenden Segmente hängen dann zusammen wie die Rollladenprofile eines Rollladens.

In einer weiteren Ausgestaltung der erfindungsgemäßen Masten oder Stützen sind einige oder alle Segmente eines Längsabschnitts aus einer gemeinsamen Platte gefertigt, wobei die Segmente nicht vollständig voneinander getrennt sind, sondern in einer äußeren oder inneren, im Vergleich zur Gesamtdicke der jeweiligen Segmente dünnen Materiallage noch miteinander verbunden sind. Das Material der Segmente und die verbleibende Materialstärke können so gewählt werden, dass aufgrund der Materialeigenschaften die Einzelsegmente um die Längsachse gebogen werden können. Hierzu ist, sofern als Material Holz oder ein Holzwerkstoff verwendet wird, das Material im Bereich der zu erzeugenden Biegung zu befeuchten. Auch kann die verbleibende Materialstärke so gewählt sein, dass sie geeignet ist, einem Verschieben benachbarter Segmente gegeneinander entgegenzuwirken. Auf diese Weise sind die Segmente nicht vollständig vereinzelt, aber derart ausgebildet, dass sie zu einem Längsabschnitt zusammengerollt werden können. Werden bei einer solchen Ausgestaltung die aneinander anliegenden Stirnseiten benachbarter Segmente miteinander verleimt, kann auf eine Profilierung der Stirnseiten unter Umständen sogar verzichtet werden. Die Stirnflächen wären dann eben ausgebildet und könnten beispielsweise über V-förmige Einschnitte in die Platte gebildet werden.

Die Segmente bestehen vorzugsweise aus Holz oder einem Holzwerkstoff und insbesondere aus Furnierschichtholz. Furnierschichtholz (FSH) hat gegenüber Holz oder Brettschichtholz den Vorteil, dass es unter Witterungseinflüssen deutlich weniger quillt und schindet und eine höhere Festigkeit aufweist. Besonders bevorzugt sind FSH-Platten mit in Längs- und Querrichtung orientierten Furnierschichten, die insbesondere aus Nadelhölzern wie Fichte oder Kiefer oder auch aus Laubhölzern wie beispielsweise Buchenholz angeboten werden, wobei Buchenfurnierschichtholz eine besonders hohe Tragfähigkeit besitzt.

Besonders bevorzugt ist phenolharzgetränktes Furnierschichtholz mit imprägnierten Furnierlagen, insbesondere aus Buche, dessen Phenolharzanteil bei etwa 15% oder sogar mehr liegt. Der besondere Vorteil solcher Holzverbundwerkstoffe ist, dass sie resistent gegen Pilz und Moderfäule sind, so dass ein daraus hergestellter Mast ohne weitere Schutzmaßnahmen in das Erdreich eingesetzt werden kann. Darüber hinaus haben solche Verbundwerkstoffe eine wesentlich höhere Festigkeit als Holz oder andere Holzwerkstoffe, so dass Masten mit einer höheren Traglast konstruiert werden können oder der Materialbedarf bzw. die Dicke der Segmente für die Masten oder Stützen gegenüber solchen aus Holz oder einem anderen Holzwerkstoff deutlich geringer dimensioniert sein können. Es ist sinnvoll, das Holz oder den Holzwerkstoff zu imprägnieren, um ihn gegen Witterungseinflüsse und/oder - insbesondere bei einer Verwendung eines erfindungsgemäßen Trägers als Mast - gegen mikrobiellen Befall oder Pilzbefall zu schützen. Erfindungsgemäße Masten aus Holz oder einem Holzwerkstoff können im Übrigen mit allen bekannten und herkömmlichen, von außen bzw. innen aufzubringenden Schutzsystemen gegen Holz zerstörende Organismen geschützt werden. In Ergänzung oder alternativ zu einer Imprägnierung können die Segmente mit einer Kunststofffolie überzogen sein. Ein Kunststoffüberzug kann auch als Schutz von Segmenten aus anderen Werkstoffen geeignet sein.

Natürlich sind auch andere Werkstoffe mit für den jeweiligen anzunehmenden Lastfall ausreichenden mechanischen Eigenschaften wie Kunststoffe, die gegebenenfalls mit Glasfasern oder anderen Fasern wie Glasfasern bewehrt sein können, oder andere Verbundwerkstoffe, beispielsweise Holz-/Beton- oder Holz-/Stahl-Verbundwerkstoffe für die Segmente verwendet werden. Es ist auch bei besonderen Lastfällen nicht ausgeschlossen, innerhalb eines Längsabschnitts Segmente aus unterschiedlichen Materialien zu verwenden, um dem konkreten Lastfall am besten gerecht zu werden, beispielsweise indem ein Segment aus einem besonders zugfesten Material besteht und das gegenüberliegende Segment aus einem besonders druckfesten Material.

Bei erfindungsgemäßen Masten und Stützen mit mehreren Längsabschnitten ist es darüber hinaus möglich und je nach Anwendungsfall sinnvoll, für die Längsabschnitte unterschiedliche Werkstoffe zu verwenden. Auch müssen nicht alle Längsabschnitte segmentiert sein. So ist es denkbar, zur Aufnahme von Druckkräften in bestimmten Bereichen des Mastes einen Längsabschnitt aus Beton einzusetzen, der segmentiert, aber auch einstückig sein kann. Auch kann beispielsweise der oberste Längsabschnitt eines Freileitungsmastes aus einem besonders isolierenden Material bestehen oder zumindest aus einem solchen, das allenfalls schwach leitend ist.

In noch einer bevorzugten Ausgestaltung des erfindungsgemäßen Trägers sind die Segmente an mindestens einem Ende des Trägers nach außen gespreizt. Die Segmente können in ihrer ausgespreizten Lage beispielsweise durch stabförmige Konstruktionen aus Metall, Kunststoff oder Holzwerkstoffen, die insbesondere horizontal zwischen den ausgespreizten Segmentteilen positioniert werden, fixiert werden. Mit der Ausspreizung kann bei einer Verwendung des erfindungsgemäßen Trägers als Mast die Standfläche des Mastes und der statisch wirksame Grundkörper des Mastes im Erdreich oder in einem Betonfundament vergrößert werden. Dadurch können deutlich größere Lasten aus dem Mast in den Gründungsbereich des Mastes eingeleitet werden, die Standfestigkeit des Mastes wird wesentlich erhöht. Eine solche Ausgestaltung des Mastfußes kann eine ähnliche Wirkung entfalten wie mit dem Mast unterhalb der Bodenkante verbundene, senkrecht stehende Holzpaneele, sogenannte Paddel. Aber auch im Kopfbereich eines Mastes kann eine Ausspreizung der Segmente sinnvoll sein, zum Beispiel, um stromführende Leitungen daran zu befestigen. Es ist denkbar, dass über das Ausspreizen der oberen Segmente ein ausreichender Freileitungsabstand erzeugt werden kann, so dass die traditionell an Freileitungsmasten angebrachten Traversen nicht mehr benötigt werden, um einen ausreichenden Leitungsabstand zu erzeugen.

Erfindungsgemäße Masten eignen sich insbesondere als Freileitungsmasten für öffentliche und private Strom- und Telefonnetze, Bahnmasten für den Nah- und Fernverkehr (einschließlich solche für Straßenbahnlinien), Beleuchtungsmasten in öffentlichen oder nicht-öffentlichen Beleuchtungsnetzen oder sogar als Turm für Windkraftanlagen. Die erfindungsgemäßen Stützen können insbesondere in Baukonstruktionen jeglicher Nutzungsart und im Schalungsbau Verwendung finden.

Im Folgenden wird die Erfindung anhand von Figuren das Prinzip des Aufbaus eines erfindungsgemäßen Ausführungsbeispiels erläutert.

Es zeigen
- Fig. 1: das Prinzip eines erfindungsgemäßen Mastes in perspektivischer Darstellung;
- Fig. 2: ein Segment des in Figur 1 dargestellten Mastes;
- Fig. 3: einen Ausschnitt des in Figur 2 dargestellten Segments;
- Fig. 4: einen Schnitt entlang der in Figur 3 gekennzeichneten Linie A-A;
- Fig. 5: einen Schnitt entlang der in Figur 3 gekennzeichneten Linie B-;
- Fig. 6: eine schematische Darstellung eines aus zwei Längsabschnitten gebildeten, erfindungsgemäßen Mastes.

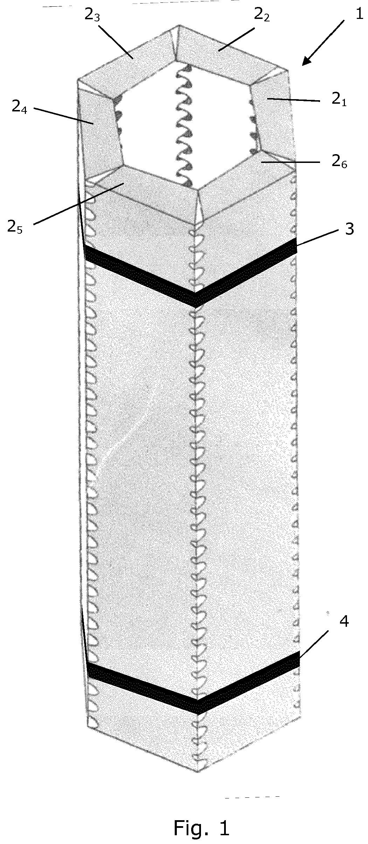

Figur 1 zeigt einen erfindungsgemäßen Mast 1. Er besteht aus sechs länglichen Segmenten 2₁, 2₂, 2₃, 2₄, 2₅, 2₆, die mit ihren seitlichen Längskanten aneinander anliegen und einen Hohlkörper bilden. Durch ein oberes Spannseil 3 und ein unteres Spannseil 4, dass außen um die Segmente herumgeführt und unter einer Zugspannung steht, werden die Stirnkanten benachbarter Segmente aufeinander gedrückt. Die Stirnkanten sind durch darin ausgebildete Erhöhungen und Vertiefungen miteinander verschränkt, so dass sie weder in radialer Richtung, noch in axialer Richtung des Mastes gegeneinander verschiebbar sind.

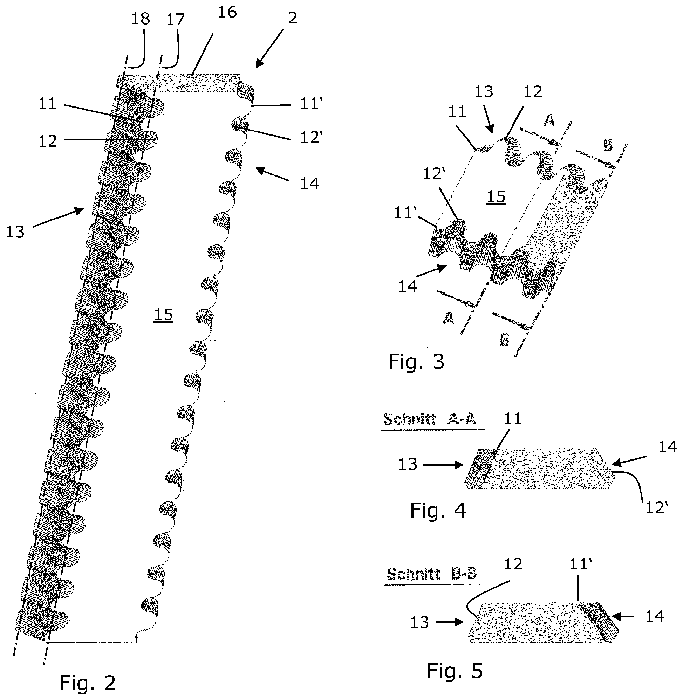

In den Figuren 2 bis 5 sind die Erhöhungen 11, 11' und Vertiefungen 12, 12' eines Segments 2 genauer dargestellt. Sie haben ein im Wesentlichen halbkreisförmiges Profil und verlaufen im Wesentlichen quer zur Längsrichtung der Stirnseiten 13, 14 des Segments 2. Dabei erstrecken sie sich über die gesamte Breite der Stirnseiten 13, 14. Wie deutlich zu erkennen ist, vergrößert sich der Querschnitt der Erhebungen 11 an der einen Stirnseite 13 des Segments 2 von einer inneren Seite 15 des Segments 2 in Richtung zur Außenseite 16 des Segments 2, während sich die Vertiefungen 12 dieser Stirnseite 13 von der inneren Seite 15 des Segments 2 in Richtung zur Außenseite 16 des Segments 2 verjüngen. An der anderen Stirnseite 14 des Segments 2 ist es genau umgekehrt. Dort verjüngt sich der Querschnitt der Erhebungen 11' an der einen Stirnseite 14 von einer inneren Seite 15 des Segments 2 in Richtung zu seiner Außenseite 16, während sich die Vertiefungen 12' dieser Stirnseite 13 von der inneren Seite 15 des Segments 2 in Richtung zu seiner Außenseite 16 vergrößern. Eine mittlere Ebene, die hier beispielhaft mit strichpunktierten Linien 17, 18 für die Stirnseite 13 angedeutet ist, verläuft im Wesentlichen radial zur Längsachse des Mastes.

Mit dieser Ausführung können sich die Stirnseiten benachbarter Segmente 2 auf einfache und effektive Weise ineinander verschränken, so dass sowohl in axialer, als auch in radialer Richtung des Mastes Kräfte zwischen den benachbarten Segmenten übertragen werden können.

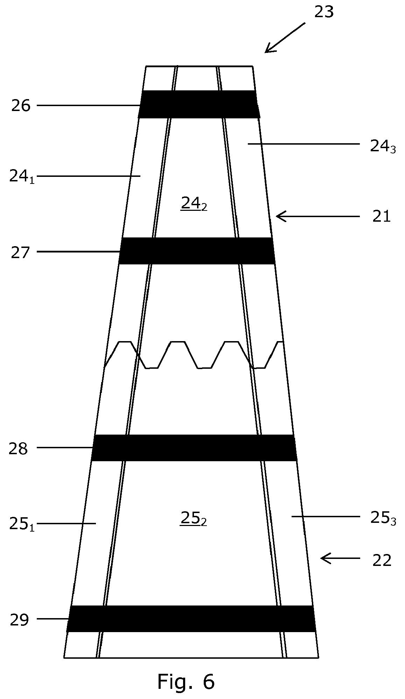

Der in Figur 1 dargestellte Mast besteht aus einem Längsabschnitt. Figur 6 zeigt schematisch einen aus zwei Längsabschnitten bestehenden Masten 23. Jeder Mastabschnitt ist so wie der in Figur 1 dargestellte Mast aus mehreren Segmenten 24₁, 24₂, 24₃, 25₁, 25₂, 25₃ zusammengesetzt, die durch obere und untere Spanngurte 26, 27, 28, 29 gegeneinander verspannt sind. Die aneinander Anliegenden Stoßkanten des oberen und des unteren Längsabschnitts 21, 22 sind verzahnt ausgebildet und greifen ineinander. Sie können miteinander verleimt und/oder mit geeigneten mechanischen Befestigungsmitteln miteinander verbunden sein.

## Patentansprüche

1. Mast oder Stütze mit mindestens einem Längsabschnitt, wobei der Längsabschnitt mit mindestens zwei in Umfangsrichtung benachbarten, einen Hohlkörper bildenden Segmenten gebildet ist, die fest miteinander verbunden oder zusammengehalten sind, **gekennzeichnet durch** Mittel zum Erzeugen eines in Umfangsrichtung wirkenden Anpressdrucks von benachbarten Segmenten gegeneinander und **durch** Mittel, die einem Verschieben der Segmente gegeneinander entgegenwirken.

2. Mast oder Stütze nach Anspruch 1, **gekennzeichnet durch** mindestens ein um die Segmente außen herum laufendes Spannmittel zum Erzeugen eines in Umfangsrichtung wirkenden Anpressdrucks von benachbarten Segmenten gegeneinander.

3. Mast oder Stütze nach Anspruch 2, **dadurch gekennzeichnet, dass** als außen herum laufendes Spannmittel mindestens ein Spannband vorgesehen ist.

4. Mast oder Stütze nach Anspruch 3, **gekennzeichnet durch** jeweils mindestens ein Spannband im Bereich des oberen und des unteren Endes des Längsabschnitts.

5. Mast oder Stütze nach einem der vorstehenden Ansprüche, **dadurch gekennzeichnet, dass** die aneinander anliegenden Stirnflächen benachbarter Segmente eines Längsabschnittes mit einander entsprechenden Vertiefungen und Erhöhungen als Mittel, die einem Verschieben der Segmente gegeneinander entgegen wirken, ausgebildet sind.

6. Mast oder Stütze nach Anspruch 5, **dadurch gekennzeichnet, dass** zumindest einige, vorzugsweise alle der Vertiefungen und/oder Erhöhungen einen halbkreisförmigen oder einen mehreckigen, insbesondere, dreieckigen oder trapezförmigen, Querschnitt aufweisen.

7. Mast oder Stütze nach Anspruch 5 oder 6, **dadurch gekennzeichnet, dass** sich der Querschnitt der Erhebungen einer Stirnseite eines Segments von einer inneren Seite des Segments in Richtung zur Außenseite des Segments vergrößert, während sich die Vertiefungen dieser Stirnseite von einer inneren Seite des Segments in Richtung zur Außenseite des Segments verjüngen.

8. Mast oder Stütze nach einem der Ansprüche 5 bis 7, **dadurch gekennzeichnet, dass** sich eine mittlere Ebene der Stirnflächen, um die sich die Erhebungen und Vertiefungen erstrecken, im Wesentlichen radial zur Längsachse des Mastes bzw. der Stütze verlaufen.

9. Mast oder Stütze nach einem der vorstehenden Ansprüche, **dadurch gekennzeichnet, dass** aneinander anliegenden Stirnseiten benachbarter Segmente miteinander verleimt sind.

10. Mast oder Stütze nach einem der vorstehenden Ansprüche, **dadurch gekennzeichnet, dass** zwischen einander zugewandten Stirnseiten benachbarter Segmente ein Materialstreifen, insbesondere ein Metallband, vorgesehen ist, wobei vorzugsweise
- der bzw. die Materialstreifen mit in beide Stirnseiten eingreifenden, spitzen Erhebungen, insbesondere Dornen oder Stiften, versehen ist/sind, und/oder
- der bzw. die Materialstreifen ein Lochblech ist/sind, und/oder
- der bzw. die Materialstreifen in Längsrichtung des Mastes bzw. der Stütze über die Segmente übersteht/überstehen.

11. Mast oder Stütze nach einem der vorstehenden Ansprüche, **gekennzeichnet durch** in aneinander anliegende Stirnflächen benachbarter Segmente eingreifende Partikel, vorzugsweise aus Metall oder Kunststoff, oder auch aus Keramik.

12. Mast oder Stütze nach einem der vorstehenden Ansprüche, **dadurch gekennzeichnet, dass** benachbarte Segmente über ein oder mehrere Bänder miteinander verbunden sind.

13. Mast oder Stütze nach einem der vorstehenden Ansprüche, **dadurch gekennzeichnet, dass** einige oder alle Segmente eines Längsabschnitts aus einer gemeinsamen Platte gefertigt sind, wobei die Segmente nicht vollständig voneinander getrennt sind, sondern in einer äußeren oder inneren, im Vergleich zur Gesamtdicke der jeweiligen Segmente dünnen Materiallage noch miteinander verbunden sind.

14. Mast oder Stütze nach einem der vorstehenden Ansprüche, **dadurch gekennzeichnet, dass** die Segmente aus Holz oder einem Holzwerkstoff und insbesondere aus Furnierschichtholz bestehen.

15. Mast nach einem der vorstehenden Ansprüche, **dadurch gekennzeichnet, dass** er Bestandteil eines Freileitungsmastes, eines Bahnmastes, eines Beleuchtungsmastes, eines Funkmastes oder eines Mastes einer Windkraftanlage ist.
